# EUROPÄISCHE PATENTANMELDUNG

(11) **EP 1 283 653 A2**
(43) Veröffentlichungstag der Anmeldung: **12.02.2003**
(21) Anmeldenummer: 02102010.2
(22) Anmeldetag: 09.07.2002
(51) Int. Cl.: H04Q 11/00

(54) **Signalisierungs-Proxy-Einrichtung zum automatischen Aufbau von Ersatzpfaden in optischen Netzen**

(30) Priorität: 09.08.2001 DE 10139155
(71) Anmelder: SIEMENS AKTIENGESELLSCHAFT, 80333 München (DE)
(72) Erfinder: Charzinski, Joachim, 85764, Oberschleiszeim (DE)

(57) **Zusammenfassung**

Die Erfindung betrifft eine Datenverbindungs-Schalteinrichtung (40) zur Verwendung in einem optischen Nachrichtennetzwerk (30), ein optisches Nachrichtenübermittlungsverfahren, sowie ein optisches Nachrichtennetzwerk (30), bei welchem über eine erste Datenverbindung mit Hilfe von optischen Signalen Daten von einer ersten Sende-/Empfangseinrichtung (36) über mehrere miteinander verbundene Netzknoteneinrichtungen (31, 33) eines optischen Transportnetzes (35) an eine zweite Sende-/Empfangseinrichtung (37) übermittelt werden, dadurch **gekennzeichnet**, dass eine Datenverbindungs-Schalteinrichtung (40) zwischen die erste Sende/Empfangseinrichtung (36) und eine der Netzknoteneinrichtungen (31) geschaltet ist, welche selbständig den Aufbau einer zweiten Datenverbindung zwischen erster und zweiter Sende/Empfangseinrichtung (36, 37) veranlaßt, indem sie ein Datenverbindungsaufbau-Signalisiersignal (S13, S111) an die entsprechende Netzknoteneinrichtung (31) versendet, in welchem Informationen bezüglich des gewünschten Verlaufs der zweiten Datenverbindung enthalten sind.

## Beschreibung

Die Erfindung betrifft ein optisches Nachrichtennetzwerk gemäß Oberbegriff des Anspruchs 1, eine Datenverbindungs-Schalteinrichtung zur Verwendung in einem derartigen Nachrichtennetzwerk, sowie ein optisches Nachrichtenübermittlungsverfahren gemäß Oberbegriff des Anspruchs 17.

Optische Nachrichtennetzwerke weisen im allgemeinen eine erste Sende-/Empfangseinrichtung auf, von welcher aus über eine Datenverbindung optische Signale unter Zwischenschaltung mehrerer miteinander verbundener Netzknoteneinrichtungen an eine zweite Sende-/Empfangseinrichtung übermittelt werden. Die Netzknoteneinrichtungen können z.B. jeweils über einen oder mehrere Lichtwellenleiter miteinander verbunden sein.

Die Datenübertragung innerhalb des Nachrichtennetzes kann beispielsweise mit Hilfe von optischen WDM-Binärsignalen erfolgen ("WDM" = wavelength division multiplex bzw. Wellenlängen-Multiplex). Dabei werden über einen einzigen Lichtwellenleiter mehrere, wellenlängengemultiplexte, gepulste optische Signale übertragen.

Bei den derzeit verwendeten Nachrichtennetzen werden die innerhalb des Netzes verwendeten Datenverbindungen nicht mittels über separate Signalisierkanäle gesendete Signalisiersignale eingerichtet, sondern mittels einer zentralen Steuereinrichtung bzw. eines zentralen Netzmanagements.

Zum Anschluß von Sende-/Empfangseinrichtungen an derartige Netze können sog. Schutz-Schalteinrichtungen (PSU bzw. Protection Switching Unit) vorgesehen sein, die beim Auftreten von Störungen auf einer ersten Datenverbindung veranlassen, daß die von der ersten Sende-/Empfangseinrichtung ausgesendeten optischen Signale fortan über eine zweite, zur ersten Datenverbindung unterschiedlichen Datenverbindung übertragen werden.

Die Erfindung hat zur Aufgabe, ein neuartiges optisches Nachrichtennetzwerk, eine neuartige Datenverbindungs-Schalteinrichtung zur Verwendung in einem optischen Nachrichtennetzwerk, sowie ein neuartiges optisches Nachrichtenübermittlungsverfahren zur Verfügung zu stellen.

Sie erreicht dieses und weitere Ziele durch die Gegenstände der Ansprüche 1, 16 und 17.

Vorteilhafte Weiterbildungen der Erfindung sind in den Unteransprüchen angegeben.

Gemäß einem Grundgedanken der Erfindung wird ein optisches Nachrichtennetzwerk zur Verfügung gestellt, bei welchem über eine erste Datenverbindung mit Hilfe von optischen Signalen Daten von einer ersten Sende-/Empfangseinrichtung über mehrere miteinander verbundene Netzknoteneinrichtungen eines optischen Transportnetzes an eine zweite Sende-/Empfangseinrichtung übermittelt werden, **dadurch gekennzeichnet**, dass eine Datenverbindungs-Schalteinrichtung zwischen die erste Sende-/Empfangseinrichtung und eine der Netzknoteneinrichtungen geschaltet ist, welche selbständig den Aufbau einer zweiten Datenverbindung zwischen erster und zweiter Sende-/Empfangseinrichtung veranlaßt, indem sie ein Datenverbindungsaufbau-Signalisiersignal an die entsprechende Netzknoteneinrichtung versendet, in welchem Informationen bezüglich des gewünschten Verlaufs der zweiten Datenverbindung enthalten sind.

Vorteilhaft ist das optische Transportnetz ein ASON-Netz (ASON = automatically switched optical network). Besonders bevorzugt ist die Datenverbindungs-Schalteinrichtung mit einer Netzadressen-Speichereinrichtung verbunden, in welcher eine oder mehrere der zweiten Sende-/Empfangseinrichtung im Adressraum des optischen Transportnetzes zugeordnete optische Netzadressen abgespeichert sind.

Vorzugsweise kommt der Datenverbindungs-Schalteinrichtung für die erste Sende-/Empfangseinrichtung z.B. bzgl. Netzadressen-Abfrage und/oder (Verbindungs-Schalt-)Signalisierung eine Proxy-Funktion zu. Beispielsweise kann die Datenverbindungs-Schalteinrichtung beim Auftreten von Störungen oder zu starken Störungen auf der ersten Datenverbindung die Datenübertragung - ohne Einfluß der ersten Sende-/Empfangseinrichtung - automatisch von der ersten Datenverbindung auf die zweite (ungestörte oder weniger stark gestörte) Datenverbindung umschalten.

Im folgenden wird die Erfindung anhand mehrerer Ausführungsbeispiele und der beigefügten Zeichnung näher erläutert. In der Zeichnung zeigt:
Figur 1 eine schematische Darstellung eines optischen Nachrichtennetzwerks mit Ersatz-Datenverbindungs-Schalteinrichtungen gemäß dem Stand der Technik;
Figur 2 eine schematische Darstellung eines automatisch vermittelnden optischen Netzes (ASON);
Figur 3 eine schematische Darstellung eines optischen Nachrichtennetzwerks gemäß einem ersten Ausführungsbeispiel der vorliegenden Erfindung;
Figur 4 eine schematische Darstellung des zeitlichen Ablaufs von zwischen der in Figur 3 gezeigten Teilnehmeranschlußeinrichtung, der Datenverbindungs-Schalteinrichtung, der Netzadressen-Speichereinrichtung, und zwei Netzknoten-Einrichtungen ausgetauschten Signalisiersignalen;
Figur 5 eine schematische Darstellung eines optischen Nachrichtennetzwerks gemäß einem zweiten Ausführungsbeispiel der vorliegenden Erfindung;
Figur 6 eine schematische Darstellung eines optischen Nachrichtennetzwerks gemäß einem dritten Ausführungsbeispiel der vorliegenden Erfindung; und
Figur 7 eine schematische Darstellung des zeitlichen Ablaufs von zwischen der in Figur 6 gezeigten Teilnehmeranschlußeinrichtung, der Datenverbindungs-Schalteinrichtung, zwei Netzadressen-Speichereinrichtungen und zwei Netzknoten-Einrichtungen ausgetauschten Signalisiersignalen.

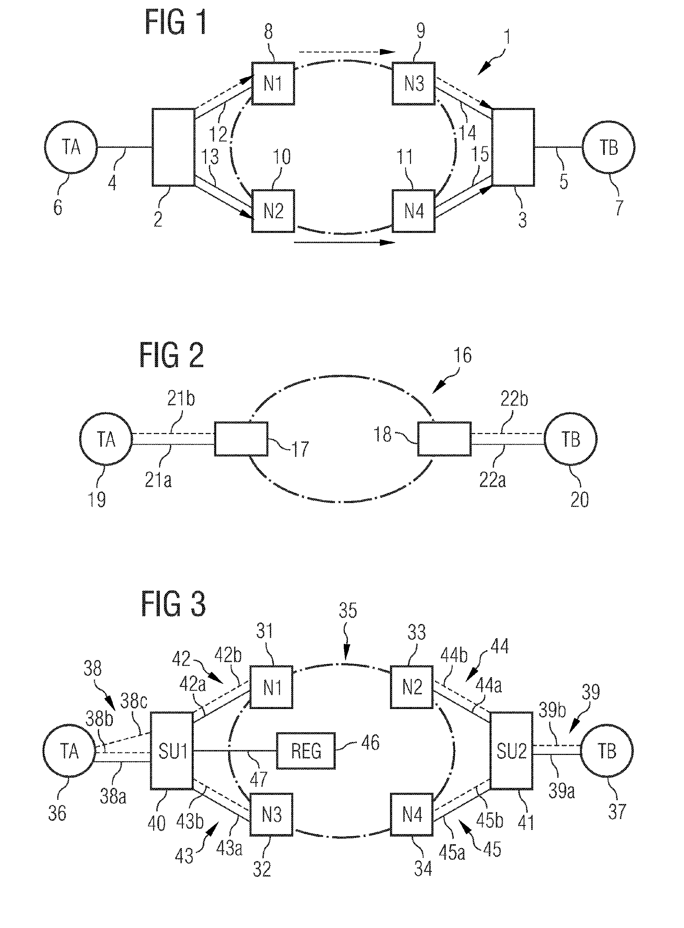

Gemäß Figur 1 weist ein optisches Nachrichtennetzwerk bzw. optisches Transportnetz (OTN) 1 gemäß dem Stand der Technik mehrere Netzknoten-Einrichtungen 8, 9, 10, 11 auf, sowie mehrere Datenverbindungs-Schalteinrichtungen bzw. PSUs 2, 3 (PSU = Protection Switching Unit), an die über entsprechende Lichtwellenleiter 4, 5 jeweils eine Teilnehmeranschlußeinrichtung 6, 7 angeschlossen ist. Die erste Datenverbindungs-Schalteinrichtung 2 ist über einen Lichtwellenleiter 12 an eine erste Netzknoten-Einrichtung 8, und über einen weiteren Lichtwellenleiter 13 an eine zweite Netzknoten-Einrichtung 10 angeschlossen. Auf entsprechende Weise ist die zweite Datenverbindungs-Schalteinrichtung 3 jeweils über Lichtwellenleiter 14, 15 an eine dritte und vierte Netzknoten-Einrichtung 9, 11 angeschlossen. Die Netzknoten-Einrichtungen 8, 9, 10, 11 (sowie eine Vielzahl weiterer, nicht dargestellter Netzknoten-Einrichtungen) sind innerhalb des optischen Transportnetzes (OTN) 1 über eine Vielzahl von Lichtwellenleitern miteinander verbunden.

Bei dem in Figur 1 gezeigten optischen Transportnetz (OTN) 1 werden die bei der Übertragung von Daten zwischen den einzelnen Netzknoteneinrichtungen jeweils konkret verwendeten Datenverbindungen von einem zentralen Netzmanagement-System eingerichtet.

Beim Auftreten von Störungen (oder beim Auftreten von zu starken Störungen) auf einer über den Lichtwellenleiter 13, die zweite (und vierte) Netzknoteneinrichtung 10, 11 geführte "Arbeits"-Datenverbindung (in der Darstellung gemäß Figur 1 durch die aus durchgezogenen Linien bestehenden Pfeile verdeutlicht) leiten die Datenverbindungs-Schalteinrichtungen 2, 3 die von einer entsprechenden Teilnehmeranschlußeinrichtung 6, 7 ausgesendeten optischen Signale dann stattdessen über eine über den Lichtwellenleiter 12, sowie die erste (und dritte) Netzknoteneinrichtung 8, 9 geführte "Ersatz"-Datenverbindung weiter (in der Darstellung gemäß Figur 1 durch die aus gestrichelten Linien bestehenden Pfeile verdeutlicht).

In Figur 2 ist - im Gegensatz zum Figur 1 - ein automatisch vermittelndes optisches Netz bzw. ASON-Netz 16 (ASON = automatically switched optical network) gezeigt, welches eine Vielzahl von über entsprechende Lichtwellenleiter miteinander verbundene Netzknoten-Einrichtungen 17, 18 aufweist, sowie mehrere Teilnehmeranschlußeinrichtungen 19, 20. Diese sind über jeweils einen (oder z.B. zwei) Lichtwellenleiter 21a, 21b bzw. 22a, 22b an eine entsprechende End-Netzknoten-Einrichtung 17, 18 angeschlossen, wobei jeweils ein erster Lichtwellenleitungskanal zum Übertragen von Nutzsignalen, und ein zweiter Lichtwellenleitungskanal zum Übertragen von z.B. zur Vermittlung der Nutzsignale dienenden Signalisiersignalen verwendet wird.

Figur 3 zeigt ein optisches Nachrichtennetzwerk 30 (hier: ein automatisch vermittelndes optisches Netz bzw. ASON-Netz (ASON = automatically switched optical network)) gemäß einem ersten Ausführungsbeispiel der vorliegenden Erfindung. Dieses weist eine Vielzahl von über ein Lichtwellenleiternetz 35 (in der Darstellung gemäß Figur 3 durch eine strichpunktförmige Ellipse veranschaulicht) miteinander verbundene Netzknoten-Einrichtungen 31, 32, 33, 34 auf, sowie eine Vielzahl von Teilnehmeranschlußeinrichtungen 36, 37. Bei diesen kann es sich z.B. um IP-Router (IP = Internet Protocol) mit MPLS-Signalisierung handeln.

Innerhalb des Lichtwellenleiternetzes 35 ist jede Netzknoten-Einrichtung 31, 32, 33, 34 über jeweils ein oder mehrere Lichtwellenleiterbündel mit jeweils mehreren (z.B. zwei, drei oder vier) weiteren Netzknoten-Einrichtungen 31, 32, 33, 34 verbunden. Jeweils ein (oder mehrere, parallel verlaufende) Lichtwellenleiterbündel sind in einer (z.B. ganz oder teilweise unterirdisch) verlegten Röhre angeordnet. Jedes Lichtwellenleiterbündel weist einen oder mehrere Lichtwellenleiter auf.

Zur Datenübertragung zwischen der ersten Teilnehmeranschlußeinrichtung 36 und der zweiten Teilnehmeranschlußeinrichtung 37 (und umgekehrt) kann z.B. ein WDM-Datenübertragungsverfahren verwendet werden ("WDM" = wavelength division multiplex bzw. Wellenlängen-Multiplex).

Aufgrund des Wellenlängenmultiplexes können über jeden im Netz vorhandenen Lichtwellenleiter in verschiedenen Wellenlängenbereichen gleichzeitig mehrere verschiedene, gepulste optische Binärsignale übertragen werden (die z.B. außer zur Datenübertragung zwischen der ersten und zweiten Teilnehmeranschlußeinrichtung 36, 37 z.B. zur Datenübertragung zwischen mehreren weiteren, hier nicht dargestellten Teilnehmeranschlußeinrichtungen dienen).

Wie in Figur 3 weiter gezeigt ist, sind die erste und zweite Teilnehmeranschlußeinrichtung 36, 37 über jeweils einen (oder mehrere) Lichtwellenleiter 38, 39 an eine Datenverbindungs-Schalteinrichtung 40, 41 (SU bzw. Switching Unit) angeschlossen. Die erste Datenverbindungs-Schalteinrichtung 40 ist über einen (oder mehrere) Lichtwellenleiter 42 an eine entsprechende (erste) Netzknoten-Einrichtung 31 angeschlossen, und über einen (oder mehrere) weitere Lichtwellenleiter 43 an eine entsprechende (zweite) Netzknoten-Einrichtung 32. Auf entsprechende Weise ist die zweite Datenverbindungs-Schalteinrichtung 41 über einen (oder mehrere) Lichtwellenleiter 44 an eine entsprechende (dritte) Netzknoten-Einrichtung 33 angeschlossen, und über einen (oder mehrere) weitere Lichtwellenleiter 45 an eine entsprechende (vierte) Netzknoten-Einrichtung 34.

Zwischen den Teilnehmeranschlußeinrichtungen 36, 37 und den jeweils mit diesen verbundenen Datenverbindungs-Schalteinrichtungen 40, 41, und zwischen den Datenverbindungs-Schalteinrichtungen 40, 41 und den jeweils mit diesen verbundenen Netzknoten-Einrichtungen 31, 32, 33, 34 wird jeweils ein erster Lichtwellenleitungskanal 38a, 39a, 42a, 43a, 44a, 45a zum Übertragen von Nutzsignalen verwendet (in der Darstellung gemäß Figur 3 durch durchgezogene Linien veranschaulicht), und ein zweiter Lichtwellenleitungskanal 38b, 39b, 42b, 43b, 44b, 45b zum Übertragen von - im folgenden noch näher erläuterten - Signalisiersignalen (in der Darstellung gemäß Figur 3 durch gestrichelte Linien veranschaulicht). Des weiteren ist zwischen der ersten Teilnehmeranschlußeinrichtung 36 und der ersten Datenverbindungs-Schalteinrichtungen 40 ein weiterer Lichtwellenleitungskanal 38c vorgesehen, der zur Übermittlung von (Adreßabfrage-)Signalsisiersignalen verwendet wird.

Die je verschiedenen, parallelen Lichtwellenleitungskanäle 38a, 39a, 42a, 43a, 44a, 45a bzw. 38b, 39b, 42b, 43b, 44b, 45b können jeweils über mehrere (z.B. zwei oder drei), verschiedene Lichtwellenleiter geschaltet werden, oder z.B. über ein- und denselben Lichtwellenleiter (z.B. mittels Wellenlängen- oder Zeitmultiplex).

Das optische Nachrichtennetzwerk 30 weist außerdem eine zentrale Netzadressen-Speichereinrichtung 46 eines Netzadressen-Verzeichnisdienst-Serverrechners (REG bzw. Registry) auf, der jeweils über über einen entsprechenden weiteren Lichtwellenleiter geführten Lichtwellenleitungskanal 47 mit den Datenverbindungs-Schalteinrichtungen 40, 41 in Verbindung steht.

Die optische Netzadresse einer bestimmten Teilnehmeranschlußeinrichtung 37 im Adressraum des optischen Nachrichtennetzwerks 30 ist den übrigen Teilnehmeranschlußeinrichtungen 36 nicht bekannt. Deshalb wird vor dem Aufbau einer entsprechenden Datenverbindung zunächst - unter Zwischenschaltung der Datenverbindungs-Schalteinrichtung 40 - von der entsprechenden Teilnehmeranschlußeinrichtung 36 mittels entsprechender Signalisiersignale die optische Netzadresse derjenigen Teilnehmeranschlußeinrichtung 37 abgefragt, zu der eine Verbindung aufgebaut werden soll.

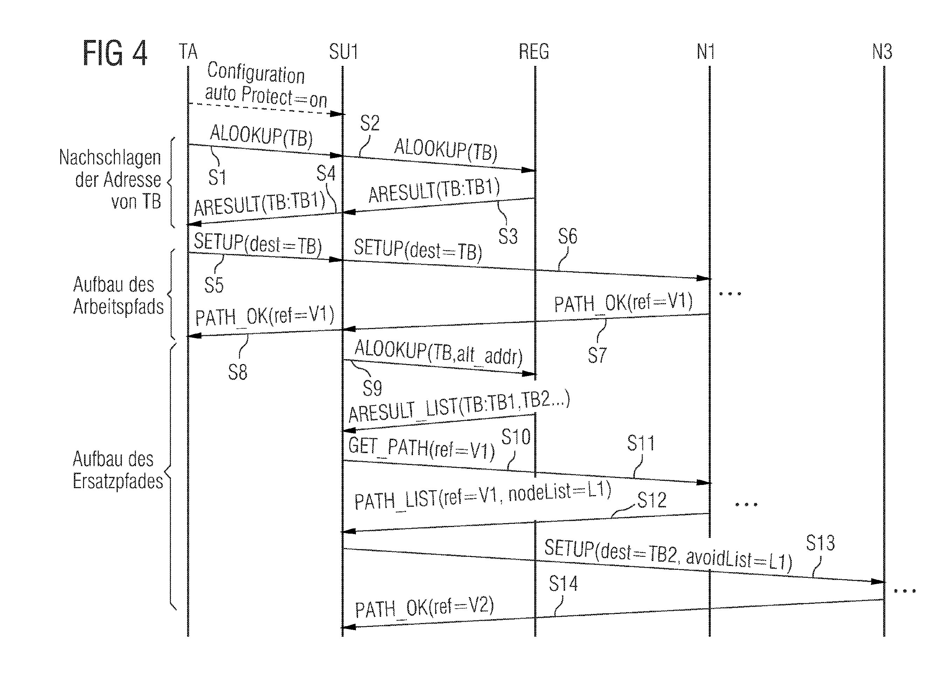

Hierzu wird gemäß Figur 4 zunächst von der ersten Teilnehmeranschlußeinrichtung (TA) 36 aus über den Lichtwellenleitungskanal 38c mittels entsprechender optischer Binärimpulse ein erstes Signalisiersignal S1 (ALOOKUP(TB)) an die Datenverbindungs-Schalteinrichtung 40 (SU1) gesendet. In diesem Adreß-Anfrage-Signalisiersignal S1 ist eine Kennung TB enthalten, die - im Adreßraum der Teilnehmeranschlußeinrichtung 36 - die Ziel-Teilnehmeranschlußeinrichtung 37 kennzeichnet.

Die Kennung TB wird unter Steuerung einer (nicht dargestellten) Steuereinrichtung der Datenverbindungs-Schalteinrichtung 40 in einer (ebenfalls nicht dargestellten) Speichereinrichtung der Schalteinrichtung 40 abgespeichert. Daraufhin wird von der Datenverbindungs-Schalteinrichtung 40 aus über den Lichtwellenleitungskanal 47 ein dem o.g. ersten Signalisiersignal S1 entsprechendes zweites Signalisiersignal (ALOOKUP(TB)) an die zentrale Netzadressen-Speichereinrichtung 46 (REG) gesendet. Aus dieser wird unter Steuerung des zugehörigen Netzadressen-Verzeichnisdienst-Serverrechners die der Kennung TB im Adreßraum des optischen Nachrichtennetzwerks 30 entsprechende Netzadresse TB1 ausgelesen.

Der Netzadressen-Verzeichnisdienst-Serverrechner veranlaßt dann, daß über den Lichtwellenleitungskanal 47 ein drittes Signalisiersignal S3 (ARESULT (TB: TB1)) an die Datenverbindungs-Schalteinrichtung 40 gesendet wird. In diesem Adreß-Rückmelde-Signalisiersignal S3 ist u.a. die Netzadresse TB1 der Ziel-Teilnehmeranschlußeinrichtung 37 enthalten.

Die Netzadresse TB1 wird in der Speichereinrichtung der Datenverbindungs-Schalteinrichtung 40 abgespeichert. Als nächstes wird von der Datenverbindungs-Schalteinrichtung 40 aus über den Lichtwellenleitungskanal 38c ein u.a. die Netzadresse TB1 der Ziel-Teilnehmeranschlußeinrichtung 37 enthaltendes, dem o.g. Adreß-Rückmelde-Signalisiersignal S3 entsprechendes viertes Signalisiersignals S4 (ARESULT (TB: TB1)) an die Teilnehmeranschlußeinrichtung 37 gesendet. Die Netzadresse TB1 wird dann - unter Zuordnung zur Teilnehmeranschlußeinrichtungs-Kennung TB - in einer Speichereinrichtung der Teilnehmeranschlußeinrichtung 36 abgespeichert.

Bei dem beschriebenen Adreßabfrage-Vorgang fungiert die Datenverbindungs-Schalteinrichtung 40 als "Proxy", so daß die Teilnehmeranschlußeinrichtung 36 nicht unterscheiden kann, ob sie direkt an eine Netzknoten-Einrichtung des Lichtwellenleiternetzes 35, oder an die Datenverbindungs-Schalteinrichtung 40 angeschlossen ist.

Als nächstes wird zum Aufbau einer (ersten, ungesicherten "Arbeits"-) Datenverbindung zwischen erster und zweiter Teilnehmeranschlußeinrichtung 36, 37 von der ersten Teilnehmeranschlußeinrichtung (TA) 36 aus gemäß Figur 4 mittels entsprechender über den Lichtwellenleitungskanal 38b übertragener optischer Binärimpulse ein fünftes Signalisiersignal S5 (SETUP (dest=TB)) an die Datenverbindungs-Schalteinrichtung (SU1) 40 gesendet. In diesem (Verbindungsaufbau-Anfrage-)Signalisiersignal S5 ist die o.g. den Ziel-Teilnehmeranschluß (TB) kennzeichnende Kennung TB bzw. dessen optische Netzadresse TB1 enthalten.

Daraufhin wird von der Datenverbindungs-Schalteinrichtung 40 aus über den Lichtwellenleitungskanal 42b ein die Ziel-Teilnehmeranschluß-Kennung TB (bzw. die Ziel-Teilnehmeranschluß-Netzadresse TB1) enthaltendes sechstes (Verbindungsaufbau-Anfrage-)Signalisiersignal S6 (SETUP (dest=TB)) an die Netzknoten-Einrichtung 31 gesendet.

Als nächstes wird von einer Netzknoten-Steuereinrichtung (nicht dargestellt) eine die aufzubauende Verbindung kennzeichnende (noch nicht vergebene) Verbindungskennung (hier: V1) ausgewählt, und in einer (ebenfalls nicht dargestellten) Netzknoten-Speichereinrichtung abgespeichert.

Die Netzknoten-Einrichtung 31 (bzw. die Netzknoten-Steuereinrichtung) wählt dann eine der mit ihr verbundenen weiteren Netzknoten-Einrichtungen als diejenige Netzknoten-Einrichtung aus, über die die Verbindung weitergeführt werden soll. Als nächstes wird von der Netzknoten-Steuereinrichtung veranlaßt, daß von der Netzknoten-Einrichtung 31 aus ein dem o.g. Signalisiersignal S6 entsprechendes weiteres Signalisiersignal an die ausgewählte weitere Netzknoten-Einrichtung gesendet wird, usw.

Auf diese Weise wird sukzessive eine über den Pfad TA - SU1 - N1 - N2 - SU2 - TB geführte "Arbeits"-Datenverbindung zwischen der ersten Teilnehmeranschlußeinrichtung 36, und der zweiten Teilnehmeranschlußeinrichtung 36 aufgebaut.

Ist die Verbindung erfolgreich bis zur zweiten Teilnehmeranschlußeinrichtung 37 hin aufgebaut worden, wird dies der zweiten Datenverbindungs-Schalteinrichtung 41 von der zweiten Teilnehmeranschlußeinrichtung 37 über ein über den Lichtwellenleitungskanal 39b gesendetes Signalisiersignal mitgeteilt, von wo aus diese Mitteilung über ein über den Lichtwellenleitungskanal 44b gesendetes Verbindungsaufbau-Bestätigungs-Signalisiersignal an die Netzknoten-Einrichtung 33, und von dort aus über weitere Verbindungsaufbau-Bestätigungs-Signalisiersignale an die Netzknoten-Einrichtung 31 weitergeleitet wird. Diese sendet über den Lichtwellenleitungskanal 42b ein Verbindungsaufbau-Bestätigungs-Signalisiersignal S7 (PATH_OK (ref=V1)) an die Datenverbindungs-Schalteinrichtung 40, welches u.a. die o.g. Verbindungskennung V1 enthält.

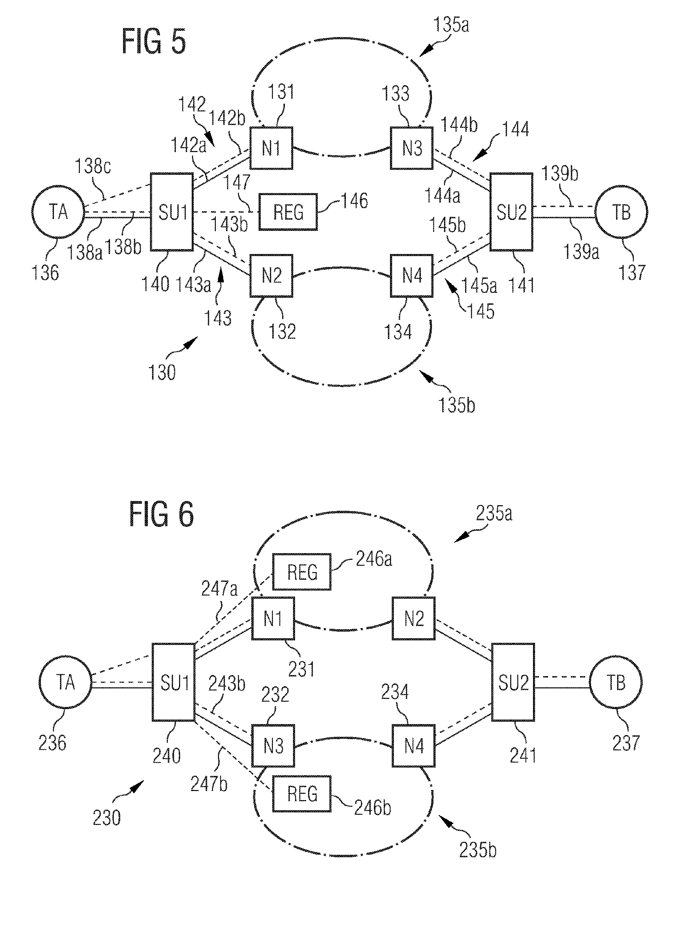

Die Datenverbindungs-Schalteinrichtung 40 sendet dann über den Lichtwellenleitungskanal 38b das in Figur 5 gezeigte, ebenfalls die o.g. Verbindungskennung V1 enthaltende Verbindungsaufbau-Bestätigungs-Signalisiersignal S8 (PATH_OK (ref=V1)) an die erste Teilnehmeranschlußeinrichtung 36. Die Verbindungskennung wird unter Steuerung einer (nicht dargestellten) Steuereinrichtung der ersten Teilnehmeranschlußeinrichtung in der Teilnehmeranschluß-Speichereinrichtung abgespeichert.

Der Aufbau der über den "Arbeits"-Pfad TA - SU1 - N1 - N2 - SU2 - TB geschalteten "Arbeits"-Datenverbindung erfolgt wie oben erläutert unter Zwischenschaltung der Datenverbindungs-Schalteinrichtung 40. Aufgrund von deren "Proxy"-Funktion kann die Teilnehmeranschlußeinrichtung 36 nicht unterscheiden, ob die "Arbeits"-Datenverbindung direkt über eine Netzknoten-Einrichtung des Lichtwellenleiternetzes 35, oder - indirekt - über die Datenverbindungs-Schalteinrichtung 40 geschaltet ist.

Als nächstes veranlaßt die Datenverbindungs-Schalteinrichtung 40, daß - zusätzlich zur o.g., über den Pfad TA - SU1 - N1 - N2 - SU2 - TB geführten "Arbeits"-Datenverbindung - eine weitere, über einen "Ersatz"-Pfad geführte "Ersatz"-Datenverbindung zur zweiten Teilnehmeranschlußeinrichtung 37 aufgebaut wird.

Der "Ersatz"-Pfad soll innerhalb des Lichtwellenleiternetzes 35 disjunkt zu dem o.g. "Arbeits"-Pfad verlaufen, d.h. für den "Ersatz"- und den "Arbeits"-Pfad sollen jeweils unterschiedliche Wege zwischen den einzelnen Netzknoten-Einrichtung 31, 32, 33, 34 verwendet werden. Alternativ oder zusätzlich soll sich die "Ersatz"-Datenverbindung auf andere Weise von der "Arbeits"-Datenverbindung unterscheiden: Beispielsweise kann der Pfad bei beiden Verbindungen zwar hintereinander über zwei identische Netzknoten-Einrichtungen 31, 32, 33, 34 verlaufen, jedoch sollen hierbei jeweils zwei verschiedene, in verschiedenen Röhren angeordnete Lichtwellenleiterbündel oder Lichtwellenleiter verwendet werden (Duct-Diversität). Alternativ oder zusätzlich kann zwischen zwei Netzknoten-Einrichtungen 31, 32, 33, 34 bei beiden Verbindungen zwar eine identische Röhre, jedoch können verschiedene, in der gleichen Röhre angeordnete Lichtwellenleiterbündel verwendet werden, oder z.B. ein identisches Lichtwellenleiterbündel, jedoch unterschiedliche darin enthaltene Lichtwellenleiter (Faser-Diversität). Alternativ oder zusätzlich können die "Arbeits"- und die "Ersatz"-Datenverbindung z.B. auch jeweils durch unterschiedliche Gebäude verlaufen (Gebäude-Diversität).

Vor dem Aufbau der "Ersatz"-Datenverbindung wird zunächst von der Datenverbindungs-Schalteinrichtung 40 bei der Netzadressen-Speichereinrichtung (REG) 46 eine alternative optische Netzadresse TB2 für die zweite Teilnehmeranschlußeinrichtung 37 abgefragt. Hierzu sendet die Datenverbindungs-Schalteinrichtung 40 gemäß Figur 4 über den Lichtwellenleitungskanal 47 ein neuntes Signalisiersignal (ALOOKUP(TB,alt_addr)) an die zentrale Netzadressen-Speichereinrichtung (REG) 46. Dieses enthält u.a. die den Ziel-Teilnehmeranschluß (TB) kennzeichnende Kennung TB. In Reaktion auf den Empfang des Signalisiersignals S9 wird unter Steuerung des zugehörigen Netzadressen-Verzeichnisdienst-Serverrechners aus der Netzadressen-Speichereinrichtung (REG) 46 die bereits erwähnte der o.g. Kennung TB entsprechende optische Ziel-Teilnehmeranschluß-Netzadresse TB1 ausgelesen, sowie eine (oder mehrere) weitere, hierzu unterschiedliche optische Netzadressen TB2 des Ziel-Teilnehmeranschluß 37 im Adreßraum des optischen Nachrichtennetzwerks 30.

Der Netzadressen-Verzeichnisdienst-Serverrechner veranlaßt dann, daß über den Lichtwellenleitungskanal 47 ein zehntes Signalisiersignal S10 (ARESULT_LIST (TB: TB1, TB2, ...)) an die Datenverbindungs-Schalteinrichtung 40 gesendet wird. In diesem Adreßliste-Rückmelde-Signalisiersignal S10 sind die verschiedenen optischen Netzadressen TB1, TB2, ... der Ziel-Teilnehmeranschlußeinrichtung 37 enthalten.

Bei einem alternativen Ausführungsbeispiel entfällt das Versenden des o.g. neunten und zehnten Singalisiersignals S9, S10. Stattdessen werden bereits während des Schritts "Nachschlagen der Adresse von TB" (vgl. Figur 4) durch Senden von dem neunten und zehnten Singalisiersignal S9, S10 entsprechender Signale anstelle des o.g. zweiten und dritten Signalisiersignals S2, S3 (ALOOKUP(TB)), ARESULT(TB: TB1)) von der Datenverbindungs-Schalteinrichtung 40 aus unmittelbar sämtliche optische Netzadressen TB1, TB2, ... der zweiten Teilnehmeranschlußeinrichtung 37 abgefragt. Eine der optischen Netzadressen (z.B. die Netzadresse TB1) wird dann zum Aufbau der "Arbeits"-, und eine andere optische Netzadresse (z.B. die Netzadresse TB2) zum Aufbau der "Ersatz"-Datenverbindung verwendet.

Die von der Netzadressen-Speichereinrichtung (REG) 46 empfangenen Netzadressen TB1, TB2, ... werden in der Speichereinrichtung der Datenverbindungs-Schalteinrichtung 40 abgespeichert.

Daraufhin veranlaßt die Steuereinrichtung der Datenverbindungs-Schalteinrichtung 40, daß von dieser aus gemäß Figur 4 mittels über den Lichtwellenleitungskanal 42b übertragener optischer Binärimpulse ein elftes Signalisiersignal S11 (GET_PATH (ref = V1)) an die Netzknoten-Einrichtung 31 gesendet wird. Dieses dient dazu, in der Speichereinrichtung der Netzknoten-Einrichtung 31 (oder anderswo im Lichtwellenleiternetz 35) gespeicherte Informationen bzgl. der von der "Arbeits"-Datenverbindung verwendeten Ressourcen abzufragen (d.h. Informationen bzgl. des jeweils verwendeten "Arbeits"-Pfads, bzw. der jeweils verwendeten Röhren, Lichtwellenleiterbündel, Lichtwellenleiter, etc.).

In dem (Ressourcen-Abfrage-)Signalisiersignal S11 ist u.a. die die aufgebaute "Arbeits"-Datenverbindung kennzeichnende Kennung V1 enthalten.

Empfängt die Netzknoten-Einrichtung 31 das Ressourcen-Abfrage-Signalisiersignal S13, werden von ihrer Steuereinrichtung die o.g. in der Netzknoten-Speichereinrichtung gespeicherten Informationen bzgl. der von der "Arbeits"-Datenverbindung verwendeten Ressourcen ausgelesen (z.B. die Kennungen der Netzknoten, über die der "Arbeits"-Pfad geführt ist, bzw. deren optische Netzadressen).

Daraufhin wird gemäß Figur 4 von der Netzknoten-Einrichtung 31 aus über den Lichtwellenleitungskanal 42b ein weiteres Signalisiersignal S12 (PATH_LIST (ref = V1, nodeList = L1)) an die Datenverbindungs-Schalteinrichtung 40 gesendet. Dieses enthält - außer der die "Arbeits"-Datenverbindung kennzeichnenden Kennung V1 - u.a. eine Liste mit den Kennungen der Netzknoten, über die der "Arbeits"-Pfad geführt ist.

Nach Empfang des Ressourcen-Mitteilungs-Signalisiersignals S12 wird von der Steuereinrichtung der Datenverbindungs-Schalteinrichtung 40 der Aufbau der "Ersatz"- Datenverbindung veranlaßt. Hierzu wird von der Datenverbindungs-Schalteinrichtung 40 aus gemäß Figur 4 mittels über den Lichtwellenleitungskanal 43b übertragener optischer Binärimpulse ein Signalisiersignal S13 (SETUP (dest=TB2; avoidList = L1)) an die Netzknoten-Einrichtung (N3) 32 gesendet. In diesem (Ersatzverbindungsaufbau-Anfrage-) Signalisiersignal S13 ist eine der o.g. (alternativen) Netzadressen TB2 der Ziel-Teilnehmeranschlußeinrichtung (TB) 37 enthalten, sowie die beim Aufbau der "Ersatz"-Datenverbindung zu vermeidenden Ressourcen (hier: eine Liste der Kennungen der Netzknoten, über die der "Arbeits"-Pfad geführt ist, und die vom "Ersatz"-Pfad gemieden werden sollen).

Nach Empfang des Ersatzverbindungsaufbau-Anfrage-Signalisiersignals S13 wird von der Netzknoten-Steuereinrichtung der Netzknoten-Einrichtung 32 eine die aufzubauende "Ersatz"-Datenverbindung kennzeichnende Verbindungskennung (hier: V2) ausgewählt, und in der Netzknoten-Speichereinrichtung abgespeichert. Die Netzknoten-Einrichtung 32 (bzw. deren Steuereinrichtung) wählt dann eine der mit der Netzknoten-Einrichtung 32 verbundenen Netzknoten-Einrichtungen als diejenige Netzknoten-Einrichtung aus, über die die "Ersatz"-Datenverbindung weitergeführt werden soll, und zwar so, daß der sich hierdurch ergebende "Ersatz"-Pfad disjunkt zum o.g. "Arbeits"-Pfad ist (d.h. hier: daß die nächste, verwendete Netzknoten-Einrichtung nicht in der o.g. Liste zu vermeidender Netzknoten-Einrichtungen enthalten ist).

Als nächstes wird von der Netzknoten-Steuereinrichtung veranlaßt, daß von der Netzknoten-Einrichtung 32 aus über einen Signalisier-Lichtwellenleitungskanal ein dem o.g. Signalisiersignal S13 entsprechendes weiteres Ersatzverbindungsaufbau-Anfrage-Signalisiersignal an die ausgewählte weitere Netzknoten-Einrichtung gesendet wird, das u.a. die o.g. Netzadresse TB2 der Ziel-Teilnehmeranschlußeinrichtung enthält, sowie die beim Aufbau der "Ersatz"-Datenverbindung zu vermeidenden Ressourcen.

Auf diese Weise wird sukzessive eine über den Pfad N3 - N4 - SU2 - TB geführte "Ersatz"-Datenverbindung zur zweiten Teilnehmeranschlußeinrichtung 37 aufgebaut.

Ist die Verbindung erfolgreich bis zur zweiten Teilnehmeranschlußeinrichtung 37 hin aufgebaut worden, wird dies der zweiten Datenverbindungs-Schalteinrichtung 41 von der zweiten Teilnehmeranschlußeinrichtung 37 über ein über den Lichtwellenleitungskanal 39b gesendetes Signalisiersignal mitgeteilt, von wo aus diese Mitteilung über ein über den Lichtwellenleitungskanal 45b gesendetes Verbindungsaufbau-Bestätigungs-Signalisiersignal an die Netzknoten-Einrichtung 34, und von dort aus über weitere Verbindungsaufbau-Bestätigungs-Signalisiersignale an die Netzknoten-Einrichtung 32 weitergeleitet wird. Diese sendet über den Lichtwellenleitungskanal 43b ein Verbindungsaufbau-Bestätigungs-Signalisiersignal S14 (PATH_OK (ref=V2)) an die Datenverbindungs-Schalteinrichtung 40, welches u.a. die o.g. Verbindungskennung V2 der "Ersatz"-Datenverbindung enthält.

Die Verbindungskennung V2 wird unter Steuerung der Steuereinrichtung der Datenverbindungs-Schalteinrichtung 40 in deren Speichereinrichtung abgespeichert.

Die Verbindungskennungen V1, V2 werden beim Aussenden der eigentlichen Nutzdaten über die Lichtwellenleitungskanäle 42a, 43a zur Kennzeichnung der jeweils zu verwendenden Verbindung verwendet.

Die o.g. "Ersatz"-Datenverbindung kann z.B. nur dann zur Datenübertragung verwendet werden, wenn Störungen auf der "Arbeits"-Datenverbindung auftreten (oder die Störungen auf der "Arbeits"-Datenverbindung zu groß werden). Dadurch ist es möglich, daß die Datenverbindungs-Schalteinrichtung 40 bei auf der "Arbeits"-Datenverbindung auftretenden (starken) Störungen die Datenübertragung schnell auf die "Ersatz"-Datenverbindung umschaltet.

Hierzu wird unter Steuerung der Steuereinrichtung der ersten und/oder der zweiten Datenverbindungs-Schalteinrichtung 40, 41 die Qualität der über die "Arbeits"-Datenverbindung übertragenen Daten gemessen (beispielsweise, indem die hierbei auftretende Bitfehlerrate bestimmt wird, z.B. durch Aussenden einer Pseudozufallsbitfolge durch die erste Datenverbindungs-Schalteinrichtung 40, und Vergleichen der empfangenen Bitfolge mit einer erwarteten, vorab in der Speichereinrichtung der zweiten Datenverbindungs-Schalteinrichtung gespeicherten Bitfolge). Die Qualität der Datenübertragung über die "Arbeits"-Datenverbindung kann (z.B. bei SDH- oder Ethernet-Übertragung) auch durch Auswertung der zusammen mit den (Nutz-)Daten in den jeweiligen Übertragungsrahmen übertragenen Prüfsummendaten festgestellt werden.

Statt die "Ersatz"-Datenverbindung (mit Hilfe der o.g. Signale S9, S10, S11, S12, S13, S14) unmittelbar und automatisch nach Aufbau der "Arbeits"-Datenverbindung aufzubauen, kann die "Ersatz"-Datenverbindung z.B. erst dann aufgebaut werden, wenn die Qualität der über die "Arbeits"-Datenverbindung übertragenen Daten unter einen ersten, vorbestimmten Schwellwert fällt. Sinkt die Datenqualität noch weiter ab (z.B. unter einen zweiten, vorbestimmten Schwellwert), wird entsprechend wie oben beschrieben durch die Datenverbindungs-Schalteinrichtung 40 die Datenübertragung von der "Arbeits"-Datenverbindung auf die "Ersatz"-Datenverbindung umgeschaltet.

Alternativ kann die "Ersatz"-Datenverbindung z.B. erst nach einem Zusammenbruch der "Arbeits"-Datenverbindung aufgebaut werden. Die Datenverbindungs-Schalteinrichtung 40 kann so den schnellen Neuaufbau einer Verbindung für ein Transportnetz emulieren, das hierfür eigentlich nicht ausgelegt ist. Das Versenden der Signale S11 und S12 kann bei dieser Alternative entfallen; die Datenverbindungs-Schalteinrichtung 40 schaltet die Datenübertragung dann von der "Arbeits"- auf die "Ersatz"-Datenverbindung um, wenn sie das Signal S14 (PATH_OK(ref=V2)) erhalten hat.

Beim o.g. Ausführungsbeispiel und bei den o.g. alternativen Ausführugnsbeispielen kann, falls der Aufbau der "Ersatz"-Datenverbindung erfolglos war, der Verbindungsaufbauversuch mehrere Male wiederholt werden. Die "Arbeits"-Datenverbindung kann während dieser Zeit schon benutzt werden, ist aber dann noch nicht geschützt.

Aufgrund der "Proxy"-Funktion der Datenverbindungs-Schalteinrichtung 40 kann die Teilnehmeranschlußeinrichtung 36 nicht unterscheiden, ob die Datenverbindungs-Schalteinrichtung 40 die Daten über die "Arbeits"-, oder über die "Ersatz"-Datenverbindung weiterschaltet.

In Figur 5 ist ein optisches Nachrichtennetzwerk 130 gemäß einem zweiten Ausführungsbeispiel der vorliegenden Erfindung gezeigt. Dieses ist entsprechend wie das in Figur 3 gezeigte Nachrichtennetzwerk 30 aufgebaut, außer daß die erste und zweite Datenverbindungs-Schalteinrichtung 140, 141 statt an ein einzelnes Lichtwellenleiternetz eines einzigen Netzbetreibers an zwei organisatorisch getrennte optische Transportnetze 135a, 135b angeschlossen sind (in der Darstellung gemäß Figur 5 durch zwei strichpunktförmige Ellipsen veranschaulicht). Bei den Transportnetzen 135a, 135b handelt es sich - entsprechend wie beim in Figur 3 gezeigten Lichtwellenleiternetz 35 - um automatisch vermittelnde optische Netze bzw. ASON-Netze (ASON = automatically switched optical network)).

Die erste Datenverbindungs-Schalteinrichtung 140 ist über einen (oder mehrere) Lichtwellenleiter 142 an eine entsprechende Netzknoten-Einrichtung 131 des ersten Transportnetzes 135a angeschlossen, und über einen (oder mehrere) weitere Lichtwellenleiter 143 an eine entsprechende Netzknoten-Einrichtung 132 des zweiten Transportnetzes 135b. Auf entsprechende Weise ist die zweite Datenverbindungs-Schalteinrichtung 141 über einen (oder mehrere) Lichtwellenleiter 144 an eine (zweite) End-Netzknoten-Einrichtung 133 des ersten Transportnetzes 135a angeschlossen, und über einen (oder mehrere) weitere Lichtwellenleiter 145 an eine entsprechende (zweite) End-Netzknoten-Einrichtung 134 des zweiten Transportnetzes 135b.

Zwischen den Teilnehmeranschlußeinrichtungen 136, 137 und den jeweils mit diesen verbundenen Datenverbindungs-Schalteinrichtungen 140, 141, und zwischen den Datenverbindungs-Schalteinrichtungen 140, 141 und den jeweils mit diesen verbundenen Netzknoten-Einrichtungen 131, 132, 133, 134 wird jeweils ein erster Lichtwellenleitungskanal 138a, 139a, 142a, 143a, 144a, 145a zum Übertragen von Nutzsignalen verwendet (in der Darstellung gemäß Figur 5 durch durchgezogene Linien veranschaulicht), und ein zweiter Lichtwellenleitungskanal 138b, 139b, 142b, 143b, 144b, 145b zum Übertragen von Signalisiersignalen (in der Darstellung gemäß Figur 5 durch gestrichelte Linien veranschaulicht).

Des weiteren ist zwischen der ersten Teilnehmeranschlußeinrichtung 136 und der ersten Datenverbindungs-Schalteinrichtungen 140 ein weiterer Lichtwellenleitungskanal 138c vorgesehen, der zur Übermittlung von (Adreßabfrage-)Signalsisiersignalen verwendet wird.

Das optische Nachrichtennetzwerk 130 weist außerdem für beide Transportnetze 135a, 135b eine zentrale Netzadressen-Speichereinrichtung 146 eines zentralen Netzadressen-Verzeichnisdienst-Serverrechners (REG bzw. Registry) auf, der jeweils über über einen entsprechenden weiteren Lichtwellenleiter geführten Lichtwellenleitungskanal 147 mit den Datenverbindungs-Schalteinrichtungen 140, 141 in Verbindung steht.

In der zentralen Netzadressen-Speichereinrichtung 146 sind - für beide Transportnetze 135a, 135b gemeinsam - die optischen Netzadressen der Teilnehmeranschlußeinrichtungen 136, 137 im Netz-Adreßraum abgespeichert. Sie können deshalb entsprechend identisch wie beim ersten Ausführungsbeispiel gemäß Figur 4 mittels Signalisiersignalen S1, S2, S3, S4 von der jeweiligen Teilnehmeranschlußeinrichtung 136 aus abgefragt werden. Außer dem Nachschlagen der Adresse der Ziel-Teilnehmeranschlußeinrichtung 37 (Signale S1, S2, S3, S4) kann auch der Aufbau des "Arbeits"- und des "Ersatz"-Pfads auf entsprechend identische Weise erfolgen, wie im Zusammenhang mit Figur 4 für das erste Ausführungsbeispiel erläutert (d.h. mittels entsprechender Signale S5, S6, S7, S8 bzw. S9, S10, S11, S12, S13, S14).

In Figur 6 ist ein optisches Nachrichtennetzwerk 230 gemäß einem dritten Ausführungsbeispiel der vorliegenden Erfindung gezeigt. Dieses ist entsprechend wie das in Figur 5 gezeigte Nachrichtennetzwerk 130 aufgebaut (d.h. die erste und zweite Datenverbindungs-Schalteinrichtung 240, 241 sind an zwei organisatorisch getrennte optische Transportnetze 235a, 235b angeschlossen), außer daß statt einer einzelnen, für beide Transportnetze 235a, 235b zentralen Netzadressen-Speichereinrichtung 246 zwei für die Netze 235a, 235b separate Netzadressen-Speichereinrichtungen 246a, 246b vorgesehen sind. Jeder Teilnehmeranschlußeinrichtung 236, 237 sind somit in jedem Netz 235a, 235b unterschiedliche, jeweils in der ersten oder zweiten Netzadressen-Speichereinrichtung 246a, 246b gespeicherte optische Netzadressen zugeordnet.

Die erste Netzadressen-Speichereinrichtungen 246a eines Netzadressen-Verzeichnisdienst-Serverrechners (REG1) des ersten Transportnetzes 235a ist über einen Lichtwellenleitungskanal 247a mit der Datenverbindungs-Schalteinrichtung 240 verbunden. Auf entsprechende Weise ist die Schalteinrichtung 240 über einen weiteren Lichtwellenleitungskanal 247b mit der zweiten Netzadressen-Speichereinrichtungen 246a eines Netzadressen-Verzeichnisdienst-Serverrechners (REG2) des zweiten Transportnetzes 235b verbunden.

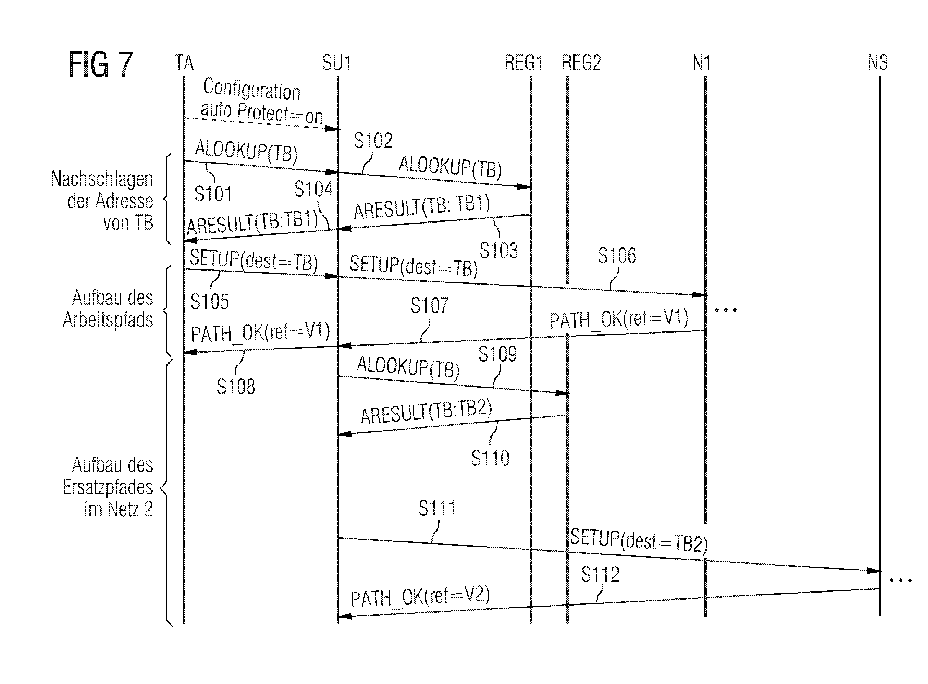

Beim in Figur 6 gezeigten optischen Nachrichtennetzwerk 230 erfolgt des Nachschlagen der optischen Netzadresse der Ziel-Teilnehmeranschlußeinrichtung 237 entsprechend identisch wie beim ersten und zweiten Ausführungsbeispiel, und zwar gemäß Figur 7 mittels zwischen der ersten Teilnehmeranschlußeinrichtung 236, der ersten Datenverbindungs-Schalteinrichtung 240, und der ersten Netzadressen-Speichereinrichtung 246 ausgetauschten Signalisiersignalen S101, S102, S103, S104 (die identisch den in Figur 4 gezeigten Signalen S1, S2, S3, S4 sind).

Des weiteren wird der "Arbeits"-Pfad auf identische Weise aufgebaut, wie bei den in Fig. 3 bzw. 5 gezeigten optisches Nachrichtennetzwerken 30, 130 (und zwar gemäß Figur 7 mittels zwischen der ersten Teilnehmeranschlußeinrichtung 236, der ersten Datenverbindungs-Schalteinrichtung 240, und der ersten Netzknoteneinrichtung 231 des ersten Transportnetzes 235a ausgetauschten Signalisiersignalen S105, S106, S107, S108 (die identisch den in Figur 4 gezeigten Signalen S5, S6, S7, S8 sind)).

Zum Aufbau der "Ersatz"-Datenverbindung wird von der Datenverbindungs-Schalteinrichtung 240 aus über den Lichtwellenleitungskanal 247b ein Signalisiersignal S109 (ALOOKUP(TB)) an die zweite Netzadressen-Speichereinrichtung 246b (REG2) gesendet. Dieses enthält u.a. die Kennung TB, welche - im Adreßraum der Teilnehmeranschlußeinrichtung 236 - die Ziel-Teilnehmeranschlußeinrichtung 237 kennzeichnet.

Daraufhin wird unter Steuerung des zugehörigen Netzadressen-Verzeichnisdienst-Serverrechners aus der zweiten Netzadressen-Speichereinrichtung 246b (REG2) die der Kennung TB im Adreßraum des zweiten Transportnetzes 235b entsprechende Netzadresse TB2 ausgelesen.

Der Netzadressen-Verzeichnisdienst-Serverrechner veranlaßt dann, daß über den Lichtwellenleitungskanal 247b ein weiteres Signalisiersignal S110 (ARESULT (TB: TB2)) an die Datenverbindungs-Schalteinrichtung 240 gesendet wird. In diesem Adreß-Rückmelde-Signalisiersignal S110 ist u.a. die o.g. Netzadresse TB2 der Ziel-Teilnehmeranschlußeinrichtung 237 enthalten.

Daraufhin wird von der Datenverbindungs-Schalteinrichtung 240 aus über den Lichtwellenleitungskanal 243b ein die Netzadresse TB2 der Ziel-Teilnehmeranschlußeinrichtung 237 enthaltendes (Verbindungsaufbau-Anfrage-)Signalisiersignal S111 (SETUP (dest=TB2)) an eine Netzknoten-Einrichtung 232 des zweiten Transportnetzes 235b gesendet. Als nächstes wird von einer Netzknoten-Steuereinrichtung (nicht dargestellt) eine die aufzubauende Verbindung kennzeichnende (noch nicht vergebene) Verbindungskennung (hier: V2) ausgewählt, und in einer (ebenfalls nicht dargestellten) Netzknoten-Speichereinrichtung abgespeichert.

Durch Senden eines weiteren Verbindungsaufbau-Anfrage-Signalisiersignals von der Netzknoten-Einrichtung 232 aus wird dann entsprechend der Darstellung oben sukzessive eine über den Pfad N3 - N4 - SU2 - TB geführte "Ersatz"-Datenverbindung zur zweiten Teilnehmeranschlußeinrichtung 237 hin aufgebaut.

Ist die Verbindung erfolgreich aufgebaut worden, wird dies von der zweiten Teilnehmeranschlußeinrichtung 237 aus mittels eines entsprechenden Signalisiersignals zunächst der zweiten Datenverbindungs-Schalteinrichtung 241 mitgeteilt, dann mittels mehrerer weiterer Signalisiersignale z.B. der Netzknoten-Einrichtung 234, der Netzknoten-Einrichtung 232, und schließlich der ersten Datenverbindungs-Schalteinrichtung 240. Hierzu wird gemäß Figur 7 von der Netzknoteneinrichtung 232 über den Lichtwellenleitungskanal 243b ein Verbindungsaufbau-Bestätigungs-Signalisiersignals S112 (PATH_OK (ref=V2)) an die Datenverbindungs-Schalteinrichtung 240 gesendet, welches u.a. die o.g. Verbindungskennung V2 enthält.

Bei weiteren, alternativen (nicht dargestellten) Ausführungsbeispielen ist die in Figur 3 bzw. 5 gezeigte Teilnehmeranschlußeinrichtung 36, 136 direkt mit der Netzadressen-Speichereinrichtung 46, 146 verbunden (beispielsweise über den Lichtwellenleitungskanal 38c, 138c). In diesem Fall entfällt die Proxy-Funktion der Datenverbindungs-Schalteinrichtung 40, 140 beim Nachschlagen der Netzadresse TB1 der Ziel-Teilnehmeranschlußeinrichtung 37, 137. In diesem Fall frägt die erste Datenverbindungs-Schalteinrichtung 40, 140 beim Aufbau der "Ersatz"-Datenverbindung mit Hilfe eines dem Signal S9 entsprechenden Signals eine zur Netzadresse TB1 alternative Netzadresse TB2 ab (statt des Signals S9 ALOOKUP(TB, alt_addr) wird dann z.B. das Signal S9' ALOOKUP(TB1, alt_addr) verwendet).

Alternativ oder zusätzlich kann die in Figur 3 und 5 gezeigte Datenverbindungs-Schalteinrichtung 40, 140 eine eigene, von der Verbindungskennung V1 verschiedene Verbindungskennung V1' generieren, und diese mittels eines dem Signal S8 PATH_OK(ref=V1) entsprechenden Signals S8' PATH_OK(ref=V1')) an die Teilnehmeranschlußeinrichtung 36, 136 übermitteln.

Des weiteren können bei dem in Figur 6 gezeigten Ausführungsbeispiel - entsprechend wie bei den in Figur 3 und 5 gezeigten Ausführungsbeispielen - den Signalen S11, S12 und S13 (GET_PATH (ref=V1), PATH_LIST (ref=V1, nodeList=L1) und SETUP(dest=TB2, avoidList=L1)) gemäß Figur 4 entsprechende Signale verwendet werden, um auszuschließen, daß ggf. in einem dritten Transportnetz die "Arbeits"- und die "Ersatz"-Datenverbindung nicht mehr disjunkt zueinander sind (z.B. über zwei identische Netzknoten-Einrichtungen laufen).

Bei weiteren alternativen Ausführungsbeispielen wird z.B. das Arbeitsverbindungs-Aufbau-Bestätigungs-Signalisiersignal S8 bzw. S108 PATH_OK(ref=V1) erst dann ausgesendet, wenn auch die "Ersatz"-Verbindung erfolgreich aufgebaut wurde.

Außerdem können statt der o.g. Datenverbindungs-Schalteinrichtungen 40, 41, 140, 141 diesen entsprechende Datenverbindungs-Schalteinrichtungen verwendet werden, um Teilbereiche eines Transportnetzs abzusichern (und nicht, wie bei den o.g. Ausführungsbeispielen, jeweils das gesamte Transportnetz). Hierzu können derartige Datenverbindungs-Schalteinrichtungen z.B. vor weitere, in den Figuren 3, 5, 6 nicht dargestellte Netzknoten-Einrichtung innerhalb des jeweiligen Transportnetzes geschaltet werden, und somit (besonders ausfallgefährdete) Teile eines Pfads innerhalb eines Transportnetzes absichern.

Bei den im Zusammenhang mit Figur 3, 5 und 6 beschriebenen Ausführungsbeispielen ist davon ausgegangen worden, daß die über die "Arbeits"- bzw. die "Ersatz"-Datenverbindung übertragenen eigentlichen Nutzdaten, und die Signalisierinformationen (z.B. die Signale S1, S2, S3, S4, etc.) jeweils mittels entsprechender optischer Impulse, und jeweils über ein- und denselben Lichtwellenleiter übertragen werden. Bei alternativen Ausführungsbeispielen werden demgegenüber die Signalisierinformationen im Vergleich zu den Nutzinformationen über separate Lichtwellenleiter, und/oder über separate Pfade übertragen. Ebenfalls denkbar ist eine Übertragung der Signalisierinformationen über ein separates Netz, z.B. ein elektrisches Übertragungsnetz. Ebenso kann der Austausch der Signalisierinformationen anstatt wie dargestellt zwischen den betroffenen Netzknoten auch zwischen den jeweils betroffenen Netzknoten, und einem oder mehreren zentralen Netzknoten erfolgen, in welchen eine Verarbeitung der Signalisierinformationen durchgeführt wird.

## Patentansprüche

1. Optisches Nachrichtennetzwerk (30), bei welchem über eine erste Datenverbindung mit Hilfe von optischen Signalen Daten von einer ersten Sende-/Empfangseinrichtung (36) über mehrere miteinander verbundene Netzknoteneinrichtungen (31, 32) eines optischen Transportnetzes (35) an eine zweite Sende-/Empfangseinrichtung (37) übermittelt werden,
**dadurch gekennzeichnet,**
**dass** eine Datenverbindungs-Schalteinrichtung (40) zwischen die erste Sende-/Empfangseinrichtung (36) und eine der Netzknoteneinrichtungen (32) geschaltet ist, welche selbständig den Aufbau einer zweiten Datenverbindung zwischen erster und zweiter Sende-/Empfangseinrichtung (36, 37) veranlaßt, indem sie ein Datenverbindungsaufbau-Signalisiersignal (S13, S111) an die entsprechende Netzknoteneinrichtung (32) versendet, in welchem Informationen bezüglich des gewünschten Verlaufs der zweiten Datenverbindung enthalten sind.

2. Optisches Nachrichtennetzwerk (30) nach Anspruch 1, bei welchem die Datenverbindungs-Schalteinrichtung (40) mit einer Netzadressen-Speichereinrichtung (46) verbunden ist, in welcher eine oder mehrere der zweiten Sende-/Empfangseinrichtung (37) im Adressraum des optischen Transportnetzes (35) zugeordnete optische Netzadressen abgespeichert sind.

3. Optisches Nachrichtennetzwerk (30) nach Anspruch 2, bei welchem die Datenverbindungs-Schalteinrichtung (40) eine in der Netzadressen-Speichereinrichtung (46) gespeicherte, der zweiten Sende-/Empfangseinrichtung (37) zugeordnete optische Netzadresse abfragt, indem sie über einen separaten Signalisierkanal (47) ein entsprechendes Abfrage-Befehlssignal sendet.

4. Optisches Nachrichtennetzwerk nach Anspruch 3, bei welchem die Datenverbindungs-Schalteinrichtung separat zum Signalisierkanal (247a) über einen weiteren Signalsisierkanal (247b) mit einer weiteren Netzadressen-Speichereinrichtung (246b) verbunden ist, in welcher eine oder mehrere der zweiten Sende-/Empfangseinrichtung (237) im Adressraum eines weiteren optischen Transportnetzes (235b) zugeordnete optische Netzadressen abgespeichert sind.

5. Optisches Nachrichtennetzwerk (30) nach einem der vorhergehenden Ansprüche, bei welchem das an die Netzknoteneinrichtung (32) gesendete Datenverbindungsaufbau-Signalisiersignal (S13, S111) über einen Signalisierkanal (43b) gesendet wird, welcher unterschiedlich zu einem Nutzdatenkanal (43a) ist, über welchen bei der zweiten Datenverbindung die eigentlichen Nutzdaten an die Netzknoteneinrichtung (32) gesendet werden.

6. Optisches Nachrichtennetzwerk (30) nach einem der vorhergehenden Ansprüche, bei welchem die erste Datenverbindung über eine mit der Datenverbindungs-Schalteinrichtung (40) verbundene Netzknoteneinrichtung (31) geschaltet ist, welche von der mit der Datenverbindungs-Schalteinrichtung (40) verbundene Netzknoteneinrichtung (32) verschieden ist, über die die zweite Datenverbindung geschaltet ist.

7. Optisches Nachrichtennetzwerk (30) nach einem der vorhergehenden Ansprüche, bei welchem die zweite Datenverbindung als Ersatzdatenverbindung verwendet wird.

8. Optisches Nachrichtennetzwerk (30) nach Anspruch 7, bei welchem die Übertragung von Daten von der ersten Sende-/Empfangseinrichtung (36) an die zweite Sende-/Empfangseinrichtung (37) dann von der Datenverbindungs-Schalteinrichtung (40) von der ersten auf die zweite Datenverbindung umgeschaltet wird, wenn auf der ersten Datenverbindung Störungen oder zu starke Störungen aufreten.

9. Optisches Nachrichtennetzwerk (30) nach einem der vorhergehenden Ansprüche, bei welchem durch die im Datenverbindungsaufbau-Signalisiersignal (S13) enthaltenen Informationen gekennzeichnet wird, daß die zweite Datenverbindung ganz oder teilweise disjunkt zur ersten Datenverbindung verlaufen soll.

10. Optisches Nachrichtennetzwerk (30) nach Anspruch 9, bei welchem die zweite Datenverbindung ganz oder teilweise über einen anderen Pfad verlaufen soll, als die erste Datenverbindung.

11. Optisches Nachrichtennetzwerk (30) nach einem der vorhergehenden Ansprüche, bei welchem die im Datenverbindungsaufbau-Signalisiersignal (S13) enthaltenen Informationen Informationen bezüglich eines von der zweiten Datenverbindung zu vermeidenden, von der ersten Datenverbindung genutzten Pfads enthalten.

12. Optisches Nachrichtennetzwerk (30) nach einem der vorhergehenden Ansprüche, bei welchem die im Datenverbindungsaufbau-Signalisiersignal (S13) enthaltenen Informationen eine der zweiten Sende-/Empfangseinrichtung (37) im Adressraum des optischen Transportnetzes (35) zugeordnete optische Netzadresse enthalten.

13. Optisches Nachrichtennetzwerk (30) nach einem der vorhergehenden Ansprüche, bei welchem die erste Sende-/ Empfangseinrichtung (36) eine Teilnehmeranschlußeinrichtung ist.

14. Optisches Nachrichtennetzwerk (30) nach einem der vorhergehenden Ansprüche, bei welchem über die erste und zweite Datenverbindung Daten mit Hilfe von wellenlängengemultiplexten optischen Signalen übertragen werden.

15. Datenverbindungs-Schalteinrichtung (40) welche so ausgestaltet und eingerichtet ist, daß sie als Datenverbindungs-Schalteinrichtung (40) in einem optischen Nachrichtennetzwerk (30) gemäß einem der Ansprüche 1 bis 14 verwendbar ist.

16. Datenverbindungs-Schalteinrichtung (40) nach Anspruch 15, welche so ausgestaltet und eingerichtet ist, daß sie eine Umwandlung zwischen verschiedenen Signalisierprotokollen vornehmen kann.

17. Optisches Nachrichtenübermittlungsverfahren, wobei über eine erste Datenverbindung mit Hilfe von optischen Signalen Daten von einer ersten Sende-/Empfangseinrichtung (36) über mehrere miteinander verbundene Netzknoteneinrichtungen (31, 33) eines optischen Transportnetzes (35) an eine zweite Sende-/Empfangseinrichtung (37) übermittelt werden,
**dadurch gekennzeichnet,**
**dass** das Verfahren den Schritt aufweist:
- Aufbau einer zweiten Datenverbindung zwischen erster und zweiter Sende-/Empfangseinrichtung (36, 37) auf Veranlassung durch eine zwischen die erste Sende-/Empfangseinrichtung (36) und eine der Netzknoteneinrichtungen (31) geschaltete Datenverbindungs-Schalteinrichtung (40) hin, indem diese ein Datenverbindungsaufbau-Signalisiersignal (S13, S111) an die entsprechende Netzknoteneinrichtung (32) versendet, in welchem Informationen bezüglich des gewünschten Verlaufs der zweiten Datenverbindung enthalten sind.
